# FASCICULE DE BREVET EUROPEEN

(11) **EP 1 098 094 B1**
(45) Date de publication et mention de la délivrance du brevet: **18.07.2007**
(21) Numéro de dépôt: 99203609.5
(22) Date de dépôt: 02.11.1999
(51) Int. Cl.: F16B 39/10

(54) **Plaque de securité crantée et bridée**
Flanschartige gezahnte Sicherheitsplatte
Flangelike toothed security plate

(43) Date de publication de la demande: 09.05.2001
(73) Titulaire: Techspace Aero, 4041 Milmort - Herstal (BE)
(72) Inventeur: LeClercq, Stéphane Maurice Edgard, 4671 Housse (BE)
(74) Mandataire: Nguyen, Dominique

(56) Documents cités:
- FR-A- 981 033
- US-A- 3 077 913
- US-A- 5 094 117

## Description

L'invention se rapporte à un dispositif de sécurité pour immobiliser en rotation autour de son axe X, une pièce polygonale, telle qu'une tête de vis ou un écrou serré à couple, ayant N1 pans et en appui sur un corps.

Bien qu'une tête de vis puisse être serrée contre la face externe du corps au moyen du filetage de son extrémité qui coopère avec le filetage d'un taraudage d'un élément disposé de l'autre côté du corps traversé par le fût de la vis, il arrive que cette vis se desserre, notamment dans le cas où l'élément et le corps sont soumis à des vibrations. Il en est de même d'un écrou monté sur la partie filetée d'un boulon et serré à couple contre le corps.

C'est pourquoi il est nécessaire dans certains montages, d'immobiliser en rotation la tête de vis ou l'écrou sur le corps.

Ceci est souvent réalisé en fixant une pièce sur le corps, ladite pièce comportant une surface en contact avec l'un des pans. Ce peut être une rondelle fixe par rapport au corps et dont on rabat un bord contre un pan. En cas de démontage de la pièce polygonale, on redresse le bord rabattu, et il est en général conseillé d'utiliser une nouvelle rondelle lors du remontage. L'inconvénient majeur de ces dispositifs est qu'il est difficile de retenir la pièce polygonale dans une position angulaire précise.

US-A-4 976 576 a prévu un dispositif de sécurité réutilisable qui comporte une rondelle fixée sur le corps et dont l'alésage comporte un filetage pour empêcher la perte involontaire de la vis, et un élément annulaire élastique fixé sur la rondelle, le pourtour de l'orifice de l'élément annulaire élastique comportant des crans destinés à coopérer avec quelques sommets de la tête de vis. Ainsi que cela est montré sur la figure 1 de ce document, l'élément annulaire élastique comporte quatre crans par pan d'une tête de vis hexagonale.

L'écart angulaire entre deux crans consécutifs est donc de 15° (360°/24). Du fait que l'élément annulaire élastique n'a qu'une position de montage, et que les sommets de la tête de vis, c'est-à-dire les dièdres formés par deux pan consécutifs, doivent être immobilisés dans des crans, la tête de vis ne peut être immobilisée que dans des positions angulaires précises séparées l'une de l'autre de 15°. On conçoit que la tête de vis sera soit trop serrée dans une position, soit pas assez serrée dans la position voisine. En outre, lors du serrage de la vis, il faudra positionner les sommets dans une position choisie parmi des positions écartées angulairement de 15°, au jeu angulaire entre les crans et la tête de vis près.

Dans le cas où il s'agit d'une tête de vis hexagonale, ainsi que cela est montré sur la figure 3 de US-A- 4 976 576, l'écart angulaire entre deux positions d'immobilisation de la tête de vis est également de 15°.

En augmentant le nombre de crans par pan, on peut évidemment diminuer l'écart angulaire entre deux positions d'immobilisation consécutives. Mais ce nombre de crans par pan est en pratique très limité, car sinon les surfaces de coopération avec les pans deviennent trop faibles pour garantir en toute sécurité l'immobilisation de la pièce polygonale.

Partant de cet état de la technique, l'invention s'est donné pour but de diminuer de manière notable l'écart angulaire entre deux positions d'immobilisation consécutives tout en garantissant des surfaces de coopération suffisantes pour immobiliser avec certitude la pièce polygonale.

Le dispositif de sécurité selon l'invention est caractérisé par le fait qu'il est constitué d'une plaque présentant un orifice d'axe X dont le pourtour comporte, par pan de ladite pièce polygonale, un nombre entier N2 de crans, les crans de ladite plaque étant régulièrement répartis autour de l'axe X et N1 de ces crans étant susceptibles de coopérer avec les N1 dièdres de ladite pièce polygonale pour immobiliser ladite pièce en rotation autour de l'axe X, et ladite plaque étant susceptible d'être fixée sur ledit corps par des moyens de fixation dans une position angulaire choisie parmi un nombre N3 de positions angulaires régulièrement réparties autour de l'axe X, le nombre N3 étant un nombre premier et étant premier avec les nombres N1 et N2.

Ainsi, avec le même nombre de crans que dans le dispositif montré sur la figure 1 de US-A-4 976 576, c'est-à-dire 24 crans sur la circonférence complète, l'écart angulaire minimum entre deux positions angulaires voisines possibles est divisée par le nombre N3. Si N3 = 5, N1 = 6 et N2 = 4, l'écart angulaire minimum possible est de 3°, au lieu de 15° dans US-A-4 976 576. Au cours du montage de la plaque de sécurité, il faut rechercher la position angulaire la plus favorable parmi 5 possibilités.

Avantageusement, pour permettre le montage de la plaque sur le corps, quelle que soit la position angulaire de la pièce polygonale, les moyens de fixation de la plaque sur le corps autorisent un jeu angulaire α entre la plaque et le corps tel que la somme du jeu angulaire α et du jeu angulaire éventuel entre la plaque et la pièce polygonale est supérieure à 360° divisé par le produit N1 x N2 x N3.

Les moyens de fixation de la plaque sur le corps comportent au moins une vis de bridage traversant avec jeu un trou ménagé dans ladite plaque et coopérant avec un alésage fileté ménagé en correspondance dans ledit corps, l'un au moins desdits éléments, plaque ou corps, comportant un nombre N3 de trous ou alésages, régulièrement répartis autour de l'axe X.

De préférence, la plaque comporte N3 trous et le corps comporte N3 alésages filetés, et il est prévu N3 vis de bridage.

Le nombre N1 de pans est pair et au moins égal à 4. Il est par exemple de 6.

Le nombre N2 de crans par pan est au moins égal à 3.

Avec les valeurs suivantes, N1 = 6, N2 = 3 et N3 = 5, l'écart angulaire entre deux positions d'immobilisation successives possibles est de 360°/(6x3x5) = 4°.

D'autres avantages et caractéristiques de l'invention ressortiront à la lecture de la description suivante, faite à titre d'exemple et en référence aux dessins annexés dans lesquels :

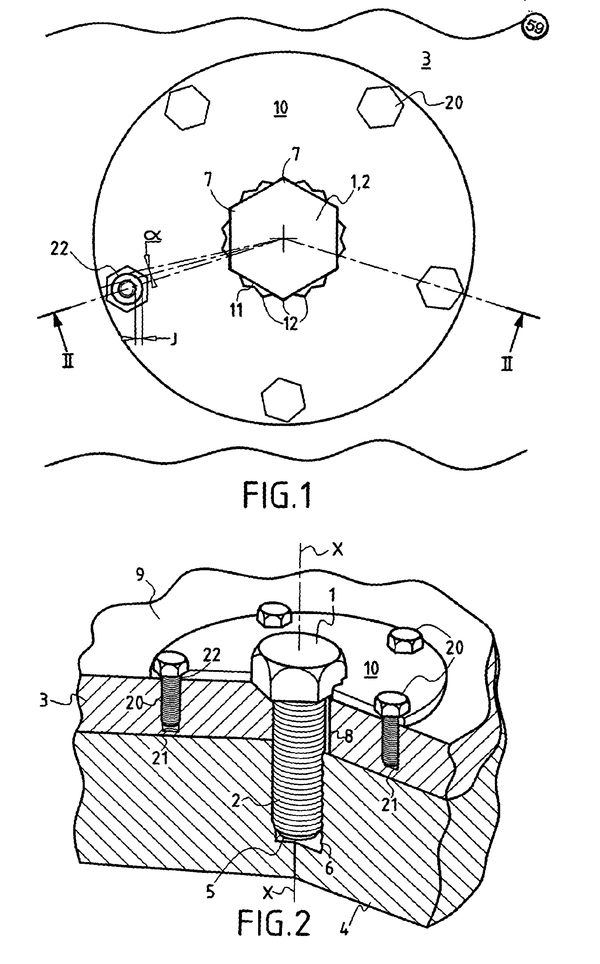

la figure 1 est une vue de dessus d'un dispositif de sécurité selon l'invention, destiné à immobiliser la tête hexagonale d'une vis ; et
la figure 2 est une vue en perspective et en coupe selon la ligne II II de la figure 1.

Sur les dessins, on a représenté par la référence 1 la tête hexagonale d'une vis 2 d'axe X, qui fixe entre elles deux pièces 3 et 4. L'extrémité filetée 5 de la vis 2 coopère avec le filetage d'un alésage taraudé 6 ménagé dans la pièce 4, et le fût de la vis 2 traverse un alésage 8 ménagé dans la pièce 3. La face inférieure de la tête hexagonale 1 est en appui contre la face externe 9 de la pièce 3.

La tête hexagonale 1 comporte six pans parallèles à l'axe et régulièrement repartis autour de l'axe X et qui forment six dièdres 7 de 120°, et elle est immobilisée en rotation autour de l'axe, grâce à une plaque annulaire 10 fixée sur la face externe 9 de la pièce 3, qui comporte un orifice 11 d'axe X dont le pourtour présente 18 crans 12, régulièrement repartis autour de l'axe X. La dimension de l'orifice 11, la forme et la disposition des crans 12 sont calculées de telle manière que les six dièdres 7 délimités par deux pans consécutifs puissent être emprisonnés dans six crans 12 régulièrement repartis autour de l'axe X.

Chaque cran 12 est délimité par deux surfaces parallèles à l'axe X et faisant un angle de 120°.

La plaque annulaire 10 comporte ainsi trois crans 12 par pan de la tête de vis 1. Lorsque la plaque annulaire 10 est fixée sur la pièce 3, l'écart angulaire entre deux crans 12 consécutifs est de 20° (360°/18).

Afin de pouvoir immobiliser la tête de vis 1 par rapport à la pièce 3, quelle que soit la position angulaire de la tête de vis 1 après serrage, il est prévu deux dispositions particulières.

Tout d'abord, la plaque annulaire 10 peut être fixée sur la pièce dans une position angulaire choisie parmi un nombre N3 de position possibles régulièrement réparties autour de l'axe X. Le nombre N3 est un nombre premier et est premier avec le nombre N1 de pans et avec le nombre N2 de crans 12 par pan. Dans l'exemple montré sur les dessins, le nombre N1 de pans est égal à 6, et le nombre N2 de crans 12 par pan est égal à 3. Le nombre N3 de positions possibles est par exemple de 5, le nombre 5 étant premier et étant premier avec les nombres 3 et 6. Lorsqu'on dit qu'un nombre N3 est premier avec un nombre N1 ou N2, cela veut dire que le plus grand commun diviseur de N3 et de N1 (ou N2) est égal à 1.

Le nombre N3 étant égal à 5 qui est premier et premier avec 3 et 6, lorsqu'on déplace la plaque annulaire 10 d'une position possible à une autre position possible, les images des crans entre les deux positions sont décalées d'une fraction de l'écart angulaire entre deux crans consécutifs. Il est ainsi possible de trouver par essais successifs, deux positions possibles de la plaque annulaire 10 dont l'écart entre les images des crans est de 4° (20°/5). Tout se passe donc comme si la plaque annulaire 10 avait 5 fois plus de crans 12, soit 90 crans, sans modifier les dimensions physiques des crans 12 et leur capacité à retenir positivement les dièdres 7 de la tête de vis 1.

En choisissant un nombre premier N3 supérieur à 5, par exemple N3 = 7, qui est premier et premier avec 3 et 7, l'écart angulaire minimum entre les images des crans dans deux positions possibles serait encore diminué, et deviendrait voisin de 3° (20°/7). Mais dans ce cas, le nombre d'essais à effectuer pour trouver la meilleure position serait plus grand et passerait de 5 à 7.

Pour permettre de rattraper l'écart minimum entre les deux positions possibles les plus proches, soit 4° dans l'exemple choisi, l'invention prévoit que la plaque annulaire 10 est montée sur la pièce 3 avec un jeu angulaire α qui, ajouté au jeu angulaire inévitable entre les crans 12 et les dièdres de la tête de vis 1, est au moins égal à 4°, valeur obtenue en divisant 360° par le produit du nombre de pans N1 de la tête de vis 1, du nombre N2 de crans 12 par pan et du nombre N3 de positions possibles de la plaque annulaire 10 sur la pièce 3.

Selon un mode de réalisation préféré, la plaque annulaire 10 est montée sur la pièce 3, au moyens de cinq vis de bridage 20, qui sont ancrées dans cinq alésages taraudés 21 ménagés dans la pièce 3 et régulièrement répartis autour de l'axe X, et dont les fûts traversent avec un jeu J des trous 22 ménagés dans la plaque annulaire 10 et régulièrement répartis autour de l'axe X. Le jeu J est calculé de telle manière que le débattement angulaire α possible de la plaque annulaire 10 autour de l'axe X soit de 4° environ.

Avec ces dispositions, il est toujours possible de monter la plaque annulaire 10 sur la pièce 3, quelle que soit la position angulaire de la tête de vis 1 après serrage.

Le tableau suivant donne les valeurs de l'écart angulaire α minimum entre les images des crans 12 dans deux positions possibles de la plaque annulaire 10, pour différentes valeurs de N1, N2 et N3.

| N1 | N2 | N1xN2 | 360°/_{(N1xN2)} | N3 | Ecart angulaire |
|---|---|---|---|---|---|
| 4 | 4 | 16 | 22°5 | 5 | 4°5 |
| 4 | 4 | 16 | 22°5 | 7 | 3°2 |
| 4 | 5 | 20 | 18° | 7 | 2°57 |
| 6 | 3 | 18 | 20° | 5 | 4° |
| 6 | 3 | 18 | 20° | 7 | 2°86 |
| 8 | 2 | 16 | 20°5 | 5 | 4°5 |
| 8 | 3 | 24 | 15° | 5 | 3° |
| 8 | 3 | 24 | 15° | 7 | 2°14 |
| 12 | 2 | 24 | 15° | 5 | 3° |
| 12 | 2 | 24 | 15° | 7 | 2°14 |

## Revendications

1. Dispositif de sécurité pour immobiliser, en rotation autour de son axe X, une pièce polygonale (1), telle qu'une tête de vis ou un écrou serré à couple, ayant N1 pans et en appui sur un corps (3),
**caractérisé par le fait qu'**il est constituée par une plaque (10) présentant un orifice (11) d'axe X dont le pourtour comporte, par pan de ladite pièce polygonale, un nombre entier N2 de crans (12), les crans de ladite plaque étant régulièrement répartis autour de l'axe X et N2 de ces crans (12) étant susceptibles de coopérer avec les N1 dièdres (7) de ladite pièce polygonale pour immobiliser ladite pièce (1) en rotation autour de l'axe X, et ladite plaque (10) étant susceptible d'être fixée sur ledit corps (3) par des moyens de fixation dans une position angulaire choisie parmi un nombre N3 de positions angulaires régulièrement réparties autour de l'axe X, le nombre N3 étant un nombre premier et étant premier avec les nombres N1 et N2.

2. Dispositif selon la revendication 1, **caractérisé par le fait que** les moyens de fixation de la plaque (10) sur le corps (3) autorisent un jeu angulaire α entre la plaque (10) et le corps (3) tel que la somme du jeu angulaire α et du jeu angulaire éventuel entre la plaque (10) et la pièce polygonale (1) est supérieure à 360° divisé par le produit N1 x N2 x N3.

3. Dispositif selon l'une des revendications 1 ou 2, **caractérisé par le fait que** les moyens de fixation de la plaque (10) sur le corps (3) comportent au moins une vis de bridage (20) traversant avec un jeu J un trou (22) ménagé dans ladite plaque (10) et coopérant avec un alésage fileté (21) ménagé en correspondance dans ledit corps (3), l'un au moins desdits éléments, plaque (10) ou corps (3), comportant un nombre N3 de trous (22) ou alésages (21), régulièrement répartis autour de l'axe X.

4. Dispositif selon la revendication 3, **caractérisé par le fait que** la plaque (10) comporte N3 trous (22) et le corps (3) comporte N3 alésages filetés (21), et il est prévu N3 vis de bridage (20).

5. Dispositif selon l'une quelconque des revendications 1 à 4, **caractérisé par le fait que** le nombre N3 est égal à 5.

6. Dispositif selon la revendication 5, **caractérisé par le fait que** le nombre N1 de pans est pair et au moins égal à 4.

7. Dispositif selon la revendication 6, **caractérisé par le fait que** le nombre N1 de pans est 6.

8. Dispositif selon l'une quelconque des revendications 5 à 7, **caractérisé par le fait que** le nombre N2 de crans (12) par pan est au moins égal à 3.

## Claims

1. Safety device for immobilizing against rotation about its axis X a polygonal part (1), such as a screw head or a nut tightened to torque, having N1 faces and bearing on a body (3), **characterized in that** this device consists of a plate (10) having an orifice (11) of axis X whose periphery comprises, for each face of the said polygonal part, a whole number N2 of notches (12), the notches of the said plate being regularly distributed about the axis X and N2 of these notches (12) being able to cooperate with the N1 dihedrals (7) of the said polygonal part so as to immobilize the said part (1) against rotation about the axis X, and the said plate (10) being able to be fastened to the said body (3) by fastening means in an angular position chosen from a number N3 of angular positions regularly distributed about the axis X, the number N3 being a prime number and being prime with the numbers N1 and N2.

2. Device according to Claim 1, **characterized in that** the means for fastening the plate (10) to the body (3) permit an angular play α between the plate (10) and the body (3) such that the sum of the angular play α and of the possible angular play between the plate (10) and the polygonal part (1) is greater than 360° divided by the product N1 x N2 x N3.

3. Device according to either of Claims 1 and 2, **characterized in that** the means for fastening the plate (10) to the body (3) comprise at least one clamping screw (20) which passes with a play J through a hole (22) formed in the said plate (10) and cooperates with a threaded bore (21) correspondingly formed in the said body (3), at least one of the said elements, namely the plate (10) or body (3), comprising a number N3 of holes (22) or bores (21) regularly distributed about the axis X.

4. Device according to Claim 3, **characterized in that** the plate (10) comprises N3 holes (22) and the body (3) comprises N3 threaded bores (21), and N3 clamping screws (20) are provided.

5. Device according to any one of Claims 1 to 4, **characterized in that** the number N3 is equal to 5.

6. Device according to Claim 5, **characterized in that** the number N1 of faces is even and at least equal to 4.

7. Device according to Claim 6, **characterized in that** the number N1 of faces is 6.

8. Device according to any one of Claims 5 to 7, **characterized in that** the number N2 of notches (12) per face is at least equal to 3.

## Patentansprüche

1. Sicherungsvorrichtung, um ein polygonales Werkstück (I) wie einen Schraubenkopf oder eine mit einem Moment festgezogene Mutter mit N1 Kanten, das sich in Anlage an einem Körper (3) befindet, um seine Achse X drehfest zu sichern,
**dadurch gekennzeichnet,**
**dass** sie aus einer Platte (10) besteht, die eine Öffnung (11) mit der Achse X aufweist, deren Umfangslinie pro Kante des genannten polygonalen Werkstücks eine ganze Zahl N2 von Einkerbungen (12) aufweist, wobei die Einkerbungen dieser Platte (10) in regelmäßigen Abständen um die Achse X verteilt angeordnet sind und N2 dieser Einkerbungen (12) geeignet sind, mit den N1 V-Winkeln (7) dieses polygonalen Werkstücks zusammenzuwirken, um dieses Werkstück (1) um die Achse X drehfest zu arretieren, und wobei diese Platte (10) geeignet ist, an dem Körper (3) mittels Befestigungsmitteln in einer Winkelstellung befestigt zu werden, die aus einer Anzahl N3 von in regelmäßigen Abständen um die Achse X verteilten Winkelstellungen ausgewählt wird, wobei die Zahl N3 eine Primzahl und mit den Zahlen N1 und N2 keinen gemeinsamen Teiler hat.

2. Vorrichtung nach Anspruch 1,
**dadurch gekennzeichnet,**
**dass** die Befestigungsmittel zur Befestigung der Platte (10) an dem Körper (3) ein Winkelspiel α zwischen der Platte und dem Körper (3) dergestalt zulassen, dass die Summe des Winkelspiels α und des möglichen Winkelspiels zwischen der Platte (10) und dem polygonalen Werkstück (1) größer ist als 360° geteilt durch das Produkt N1 x N2 x N3.

3. Vorrichtung nach einem der Ansprüche 1 oder 2,
**dadurch gekennzeichnet,**
**dass** die Befestigungsmittel zur Befestigung der Platte (10) an dem Körper (3) mindestens eine Spannschraube (20) enthalten, die sich mit Spiel durch ein in dieser Platte (10) ausgeführtes Loch (22) erstreckt und mit einer Gewindebohrung (21) zusammenwirkt, die daran anschließend in diesem Körper (3) ausgeführt ist, wobei mindestens eines der genannten Elemente, Platte (10) oder Körper (3), eine Anzahl N3 von Löchern (22) oder Bohrungen (21) aufweist, die in regelmäßigen Abständen um die Achse X verteilt angeordnet sind.

4. Vorrichtung nach Anspruch 3,
**dadurch gekennzeichnet,**
**dass** die Platte (10) N3 Löcher (22) enthält und der Körper (3) N3 Gewindebohrungen (21) enthält und dass N3 Spannschrauben (20) vorgesehen sind.

5. Vorrichtung nach einem der Ansprüche 1 bis 4,
**dadurch gekennzeichnet,**
**dass** die Anzahl N3 gleich 5 ist.

6. Vorrichtung nach Anspruch 5,
**dadurch gekennzeichnet,**
**dass** die Anzahl N1 der Kanten eine gerade Zahl ist und mindestens gleich 4 ist.

7. Vorrichtung nach Anspruch 6,
**dadurch gekennzeichnet,**
**dass** die Anzahl N1 der Kanten 6 lautet.

8. Vorrichtung nach einem der Ansprüche 5 bis 7,
**dadurch gekennzeichnet,**
**dass** die Anzahl N2 der Einkerbungen (12) pro Kante mindestens gleich 3 ist.
